# EUROPEAN PATENT APPLICATION

(11) **EP 0 857 873 A2**
(43) Date of publication of application: **12.08.1998**
(21) Application number: 98200517.5
(22) Date of filing: 02.02.1994
(51) Int. Cl.: F04B 33/00

(54) **A bicycle pump**

(30) Priority: 12.02.1993 NL 9300278
(62) Divisional of application: 94907012.2
(71) Applicant: Spanninga Metaal B.V., NL-8501 MK Joure (NL)
(72) Inventor: Hosper, Alle, 8512 AD Broek (NL)
(74) Representative: Veldman-Dijkers, Cornelia G.C., Ir.

(57) **Abstract**

A bicycle pump provided with an elongated pump housing, with a pump piston which is reciprocatingly movable within the pump housing by means of a piston rod, and with a pump hose secured to the pump housing. Said pump hose at its free end being provided with a connecting device for connecting the pump hose to a tyre valve provided with a ring. Said connecting device is provided with a connecting piece of a resilient material, which can be pushed over the valve, said connecting piece surrounding at least part of the valve when placed on the valve, and being provided with a thickening, which can be deformed by means of a shell-shaped member being slidable over the connecting piece, in such a manner that said thickening is sealingly pressed against the outer circumference of the valve upon being deformed.

## Description

The invention relates to a bicycle pump provided with an elongated pump housing, with a pump piston which is reciprocatingly movable within the pump housing by means of a piston rod, and with a pump hose secured to the pump housing, said pump hose at its free end being provided with a connecting device for connecting the pump hose to a tyre valve provided with a ring.

In order to secure the end of the pump hose to the valve use is sometimes made of a clamp more or less in the shape of a clothes-peg, one leg of said peg engaging under the valve ring. Such a clamp forms an impeding projection, whilst in practice it has furthermore become apparent that it is still not possible in many cases to secure the end of the pump hose effectively to the valve by means of a clamp of this type.

According to the invention the connecting device is provided with a connecting piece of a resilient material, which can be pushed over the valve, said connecting piece surrounding at least part of the valve when placed on the valve, and being provided with a thickening, which can be deformed by means of a shell-shaped member being slidable over the connecting piece, in such a manner that said thickening is sealingly pressed against the outer circumference of the valve upon being deformed.

A satisfactory enclosure of at least part of the valve can be effected by means of the connecting device, whilst at the same time an adequate fixation of the connecting device to the valve can be realized. The connecting piece and the shell-shaped means being slidable over the connecting piece may thereby extend concentrically about the extension of the central axis of the pump hose, so that no impeding projections are required for connecting the pump hose.

The invention will be explained in more detail hereafter with reference to an embodiment of the construction according to the invention illustrated in the accompanying Figures.

Figure 1 shows the upper end of the valve of a bicycle tyre and one end of the pump hose, with a connecting device for connecting the pump hose to the valve.

Figure 2 shows the parts illustrated in Figure 1 in a second position.

Figures 3 and 4 show, in a similar manner as in Figures 1 and 2, a second embodiment of a connecting device.

Figures 5 and 6 show, in a similar manner as in Figures 1 and 2, a third embodiment of a connecting device.

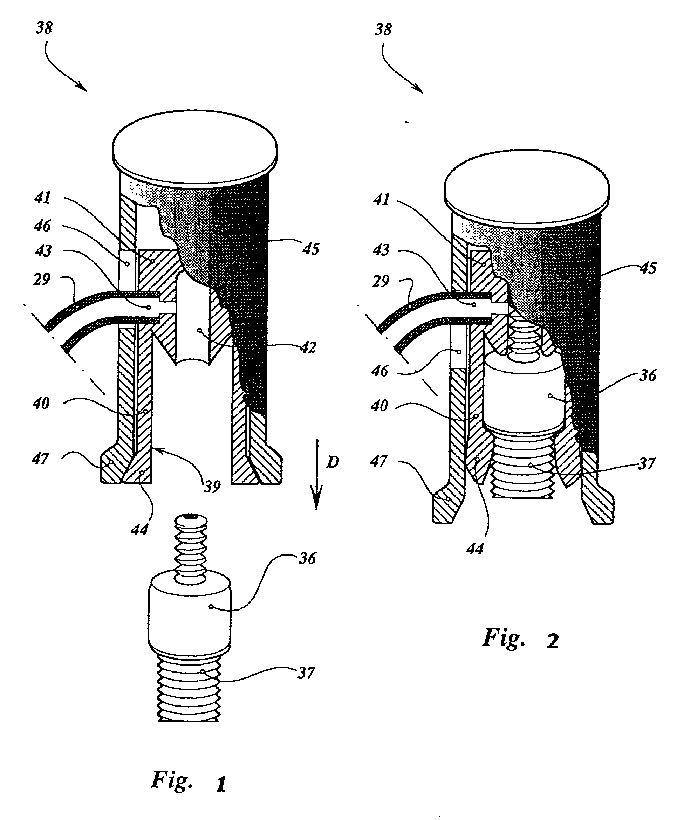

As is shown in Figures 1 and 2 a connecting device 38 is provided at a free end of a hose 29 of a bicycle pump (not shown), in order to connect the hose to a conventional valve 37 provided with a knurled ring 36 of a bicycle tyre. The connecting device 38 comprises a connecting piece 39 made of a resilient material, which comprises a cylindrical shell 40, which is closed at its upper end by a closing part 41, in the centre of which an elongated recess 42 is provided, which is open at its bottom end.

As is apparent from Figure 1, the closing part 41 is at its bottom end provided with a downwardly tapered part, which extends into the space surrounded by the shell 40.

The recess 42 is in open communication with a stepped bore 43 extending perpendicularly to the longitudinal axis of the closing part 41, in which the end of the pump hose 29 of the bicycle pump is secured, for example by glueing or vulcanizing.

The shell 40 is provided with a circular flange 44 at its free end, which in the unloaded position shown in Figure 1 gradually widens towards the outside and towards its free end relative to the longitudinal central axis of the closing part.

The connecting piece 39 is surrounded by a shell-shaped means 45 which is closed at one end, said shell-shaped means being movable in the longitudinal direction of the connecting piece 39 relative to said connecting piece 39. For this purpose the pump hose 29 is passed through a slotted hole 46 provided in the wall of the shell-shaped means 45. The shell-shaped means 45 is provided with an enlarged flange 47 at its open bottom end, against whose inner boundary edge the flange 44 of the connecting piece 39 abuts in the manner shown in Figure 1, in the position ready for pushing the connecting piece 39 onto the valve 37.

The connecting piece 39 may be pushed onto the valve 37 in the direction according to the arrow D, whereby the bottom end of the tapered portion of the closing part 41 will come to lie on top of the knurled ring 36 at one stage. Upon being pushed further downwards said bottom end of the closing part will be firmly pressed against the upper side of the usual knurled ring 36, so as to effect an air-tight sealing at that location, beside the sealing that has already been effected by the cylindrical shell 40 surrounding the knurled ring 36. Thereupon the shell 45 will be moved with respect to the connecting piece 39, as a result of which the flange 44 is deformed and at least partially pushed under the bottom edge of the knurled ring 36, so as to clamp the connecting piece 39 down on the valve in the position shown in Figure 2.

It will be apparent that in this manner a solid and at the same time airtight attachment of the connecting piece 39 to the valve 37 has been effected.

When the shell-shaped means is moved upwards again with respect to the connecting piece 39, in a direction opposite to the arrow D, the flange 44 can spring back again from the position shown in Figure 2 to the position shown in Figure 1, after which the connecting device 38 may be removed from the valve.

When not in use the hose and the connecting device 38 may be stowed away in the chamber 12, which can be closed by means of the cover 13.

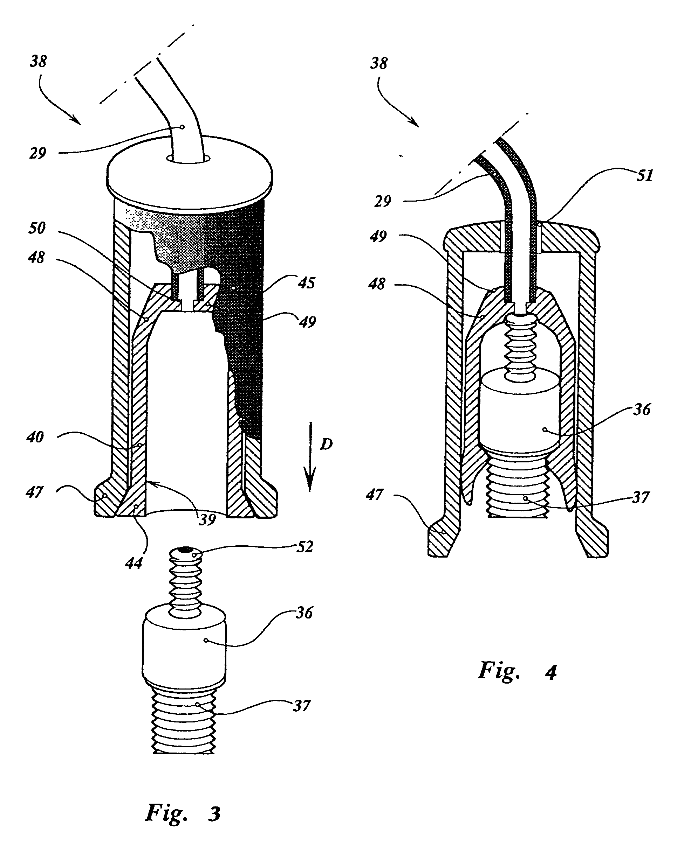

Figures 3 and 4 show a variation on the connecting device described above with reference to Figures 1 and 2. The parts in Figures 3 and 4 that correspond with the parts shown in Figures 1 and 2 are thereby provided with the same reference numerals and will not be described again.

As will be apparent from Figures 3 and 4, the shell 40 of this embodiment is at its upper end provided with a connecting piece 48 which is slightly tapered in upward direction and which is integral with the shell 40, said connecting piece connecting the shell to a wall part 49, which extends substantially perpendicularly to the longitudinal direction of the shell 40 in unloaded condition.

A passage 50 is formed in the centre of said wall part 49, to which passage the hose 29 is connected, in the manner illustrated in the Figures. The hose 29 is thereby passed through a hole 51 provided in the upper wall of the shell-shaped means 45.

Also this connecting device may be pushed over the valve, in such a manner that the wall part 49 will come to abut against the upper boundary surface 52 of the valve. When the shell-shaped means is pushed further downwards (arrow D), the wall part 49 will be pressed firmly against said surface 52 with a certain amount of deformation, so as to effect an airtight connection. Then, when the force exerted in the direction according to the arrow D exceeds a certain value, the enlarged flange 47 will snap under the knurled ring 36 in the manner described above and illustrated in Figure 4, in order to secure the connecting device 38 to the valve 37, whilst likewise an airtight connection has been obtained between the hose 29 and the valve by means of the deformed wall part 49.

The closing device may be removed in a simple manner again by moving the shell-shaped means in a direction opposite to the arrow D.

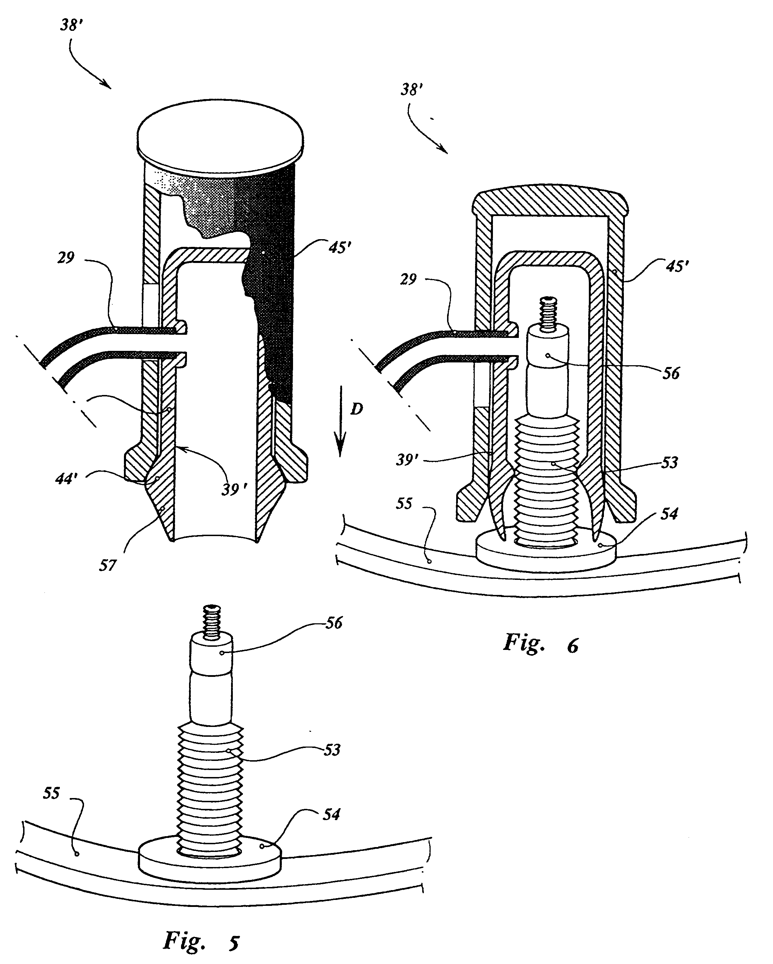

Figures 5 and 6 show a so-called French valve 53, which is fixed with respect to a rim 55 of a bicycle wheel or the like by means of a clamping ring 54 screwed onto said valve 53.

A French valve of this type is provided with a valve mechanism, which may be brought to a position suitable for inflating the bicycle tyre on which said valve 53 is mounted by rotating a ring 56, and which may be closed by rotating said ring 56 in opposite direction.

The connecting device 38' shown in Figures 5 and 6 is provided with a connecting piece 39', in a similar manner as the connecting device described above and illustrated in Figures 1 and 2, and with a shell-shaped means 45' surrounding said connecting piece. A detailed description of the connecting device 38' will not be necessary, therefore.

The only essential difference between the embodiment of the connecting device shown in Figures 1 and 2 and the construction according to Figures 5 and 6 is the fact that in the embodiment illustrated in Figures 5 and 6 a downwardly tapered extension 57 is provided under the circular flange 44' of the connecting piece 49' made of a resilient material.

When said connecting device 38' is pushed over the valve 53, the bottom edge of the extension 57 will come to abut against the upper surface of the ring 54. When the means 45' is pushed downwards, the bottom end of said extension 57 will be slightly deformed in order to obtain an airtight sealing between the bottom end of the extension 57 and the upper surface of the ring 54. Then, when a predetermined force on the shell-shaped means 45' is exceeded, the shell-shaped means 45' will be moved with respect to the connecting piece 39', as a result of which the circular flange 44' is deformed and pressed firmly against the outer circumference of the valve 53 at a position spaced from the ring 54, as shown in Figure 6, as a result of which an airtight connection of the connecting piece 39' to the valve 53 can be effected at that location as well. Then the bicycle tyre may be inflated in the usual manner, whereby the air is admitted to the tyre through the valve mechanism, which has been opened prior to placing the connecting device 38' on the valve 53, by rotating the ring 56.

It will be apparent that the constructional details used in the various embodiments according to Figures 1-6 may be combined with each other.

## Claims

1. A bicycle pump provided with an elongated pump housing, with a pump piston which is reciprocatingly movable within the pump housing by means of a piston rod, and with a pump hose (29) secured to the pump housing (9), said pump hose (29) at its free end being provided with a connecting device (38) for connecting the pump hose to a tyre valve (37) provided with a ring (36), characterized in that said connecting device (38) is provided with a connecting piece (39) of a resilient material, which can be pushed over the valve (37), said connecting piece (39) surrounding at least part of the valve (37) when placed on the valve (37), and being provided with a thickening (44), which can be deformed by means of a shell-shaped member (45) being slidable over the connecting piece (39), in such a manner that said thickening (44) is sealingly pressed against the outer circumference of the valve (37) upon being deformed.

2. A bicycle pump according to claim 1, characterized in that one end of the hose (29) of the bicycle pump (8), which is connected to said connecting piece (39), is in open communication with a passage for receiving the free end of said valve.

3. A bicycle pump according to claim 1 or 2, characterized in that said connecting piece (39) is provided with a projecting part inside a shell which can be pushed over said valve, said projecting part being provided with a passage for receiving the free end of the valve, the free end of said passage being adapted for being positioned into sealing abutment against the upper surface of a ring forming part of the valve.

4. A bicycle pump according to any one of the preceding claims, characterized in that said connecting piece (39) is provided with a resiliently deformable end (47, 57), which is intended to abut sealingly against a ring (36) by which the valve is secured with respect to a wheel rim during use of the connecting device (38).

5. A bicycle pump according to any one of the preceding claims, characterized in that said connecting piece (39) is at one end closed by a deformable upper wall provided with a passage, in such a manner, that when the connecting device (38) is being used, the part of the upper wall that bounds said passage will abut sealingly against the free end of the valve, whilst the pump hose is connected to the opening.

6. A bicycle pump according to any one of the preceding claims, characterized in that said deformable thickening is provided in such a manner, that the thickening engages under a ring forming part of the valve when being in its deformed position during use of the connecting piece.

7. A bicycle pump according to any one of the preceding claims, characterized in that the free end of the hose of the bicycle pump is connected to the side of the connecting piece and extends through a slotted hole provided in said shell-shaped means.
